# EUROPEAN PATENT SPECIFICATION

(11) **EP 1 817 966 B1**
(45) Date of publication and mention of the grant of the patent: **16.09.2009**
(21) Application number: 07380031.0
(22) Date of filing: 12.02.2007
(51) Int. Cl.: A23N 7/02, A23N 12/02

(54) **Washer-polisher for fruit and vegetables**
Wasch- und Poliervorrichtung für Obst und Gemüse
Laveur-polisseur pour fruits et légumes

(30) Priority: 14.02.2006 ES 200601583
(43) Date of publication of application: 15.08.2007
(73) Proprietor: Martin Gomez, Santiago, 40250 Mozoncillo (Segovia) (ES)
(72) Inventor: Martin Gomez, Santiago, 40250 Mozoncillo (Segovia) (ES)
(74) Representative: Pons Ariño, Angel

(56) References cited:
- EP-A1- 0 170 755
- GB-A- 163 710
- GB-A- 1 398 688
- GB-A- 191 128 599
- GB-A- 191 408 870

## Description

### OBJECT ON THE INVENTION

This invention refers to a machine specially conceived for washing and/or polishing fruit and vegetables; although the invention is also applicable to other similar machines such as peelers, graders or others. The machine is able to wash, polish and peel products with hard skin or a surface that can be exfoliated. It can also become a drier or by adjusting the distance between rollers become a grader in order to classify the products.

The object of the invention is to obtain a machine with a maximum structural solidity, minimum maintenance and lower energy consumption, at the same time offering optimum functional features.

The invention is therefore applicable in the industry for surface treatment of fruit and vegetable products such as oranges, lemons, apples, potatoes, carrots, etc...

### BACKGROUND OF THE INVENTION

There are known machines for surface treatment of fruit and vegetable products, with the aforementioned applications of washing, polishing, peeling, grading and drying based on a cylindrical revolving drum, with a slightly tilted horizontal axe. Inside this drum there are several cylindrical revolving brushes. The products to be treated enter the drum through one end and they are subjected to the effect of the brushes all along the drum, leaving it via the remaining end of the drum appropriately treated, using different types of brushes depending on the function to be done: cleaning, polishing, peeling or drying. For example in the case of dying, by the use of rollers instead of brushes, provided with a drying felt in its operative surface or allowing the grading of products by a greater or smaller spacing between brushes, so that the pieces that do not reach a pre-established level for their classification pass through the brushes.

Regarding this subject we should mention the PCT/NZ 2004/000304, on which one geared motor, through a set of belts, transmits the movement to the machine's drum, whilst another set of belts embrace the rollers of the said drum and forces them to revolve synchronized in one same direction.

Although these machines fulfil satisfactorily the function they were designed for, they present problems mainly on the following aspects:
- The transmission systems for moving the drum and the rollers result complex and increase considerably the maintenance works.
- As the drum revolves continuously and due to the aforementioned transmission systems, sliding and friction effects are produced, resulting in greater wear, leading to replacement costs.
- The machines are noisy thus contaminating the working area.
- In order to avoid the sliding of the brushes' belt, larger diameter ones are required.
- The fact that all brushes turn in the same direction is not the ideal to obtain optimum results of cleaning/washing and polishing or peeling and drying products.
- It is necessary to check regularly the tightening of the belts.

### DESCRIPTION OF THE INVENTION

The machine that this invention proposes solves in a completely satisfactory way each and every problem aforementioned.

For this and in a more precise way, this machine, starting off with the typical use of the appropriate brushes for the treatment to be carried-out, being these part of a revolving drum, focuses as main characteristic the fact that the drum is not under a continuous revolving movement, but to an intermittent movement with a reversal of the direction of rotation of 0° to 180° or more depending on necessity. All together brings a smaller consumption of energy and the necessity of a smaller number of brushes, with the consequent reduction in costs.

According to another main feature of the invention, the drum is driven by a transmission system of connecting rods. That is, from a driving element as a motor or an hydraulic or pneumatic cylinder, the typical belts or chains are eliminated and there is also a reduction in noise and vibration.

In order to obtain this effect and in agreement with another characteristic of the invention, brushes are independent, that is to say, each one of them is activated for by the corresponding motor mounted directly on one of the ends of its axel, allowing in addition that rollers can change their direction of rotation voluntarily, which improves the benefits of the machine whether washing or polishing, etc.

The lack of transmission belts allows increasing or diminishing the diameter of the brushes/rollers. When we decrease the number of brushes we increase the surface of the product in contact with the said brushes, and consequently the machine's output.

The brushes work either by electric, hydraulic or pneumatic motors, belts, pulleys or gears, which mean minimum maintenance or even no maintenance at all, the same as with the drum's transmission and operating systems.

### DESCRIPTION OF THE DRAWINGS

To complete this description and with the purpose of a better understanding of the inventions characteristics, and following a practical example to carry out this description, we enclose as part of it several drawings showing but not limiting the following:
Figure 1.- Shows a schematic drawing seen from the axel side of a washer-polisher machine purposely made with the aim of this invention, in which we can particularly observe the drum's details and how the motors that operate the brushes are positioned.
Figure 2.- Shows a schematic drawing seen from the axel side of a washer-polisher machine in which we can observe the reversal of the drum's rotation direction by end of trajectory limits.
Figure 3. - The two drum's swinging limit positions and the intermediate position are shown in this figure.
Figure 4.- Schematic representation of the drum's activating system. This system is based on a hydraulic or pneumatic cylinder.
Figure 5.- Representation similar to figure 4, where the drum's activating system is carried out by an electric or hydraulic motor.

### PREFERRED EMBODIMENT OF THE INVENTION

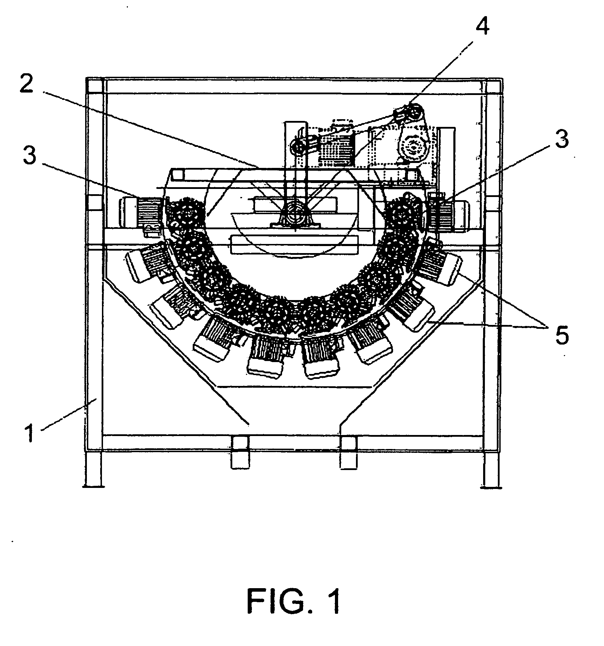

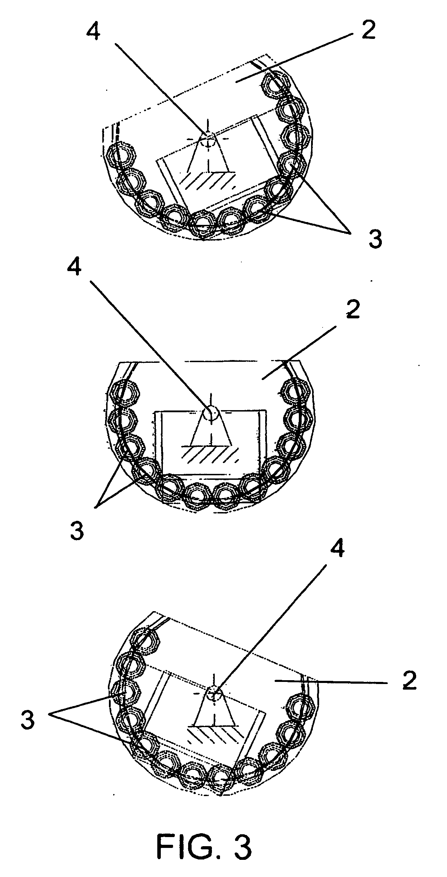

Looking at all the drawings and particularly at figure 1, we can see how the machine that we are contemplating is based on a bedplate (1) on which the drum is mounted (2) being its main components a plurality of brushes/rollers (3), of parallel axels, distributed following an imaginary semicylindrical surface, (2) a drum able to swing from 0 to 180° on its axel or more, depending on the need (4) showing an alternative movement as shown in figure 3, between the upper and lower limit positions of the said figure, using for this mechanisms such as the ones shown in figures (4) and (5), of which more details will be given in following pages.

This way the drum (2) adopts a canal shape, almost semicylindrical with an upper opening, receiving the product by one of its ends by the entry hopper, and leaving once treated by the opposite end.

Still with figure 1, we can see how each brush/roller (3) is aided by an electric motor (5) with direct action over it.

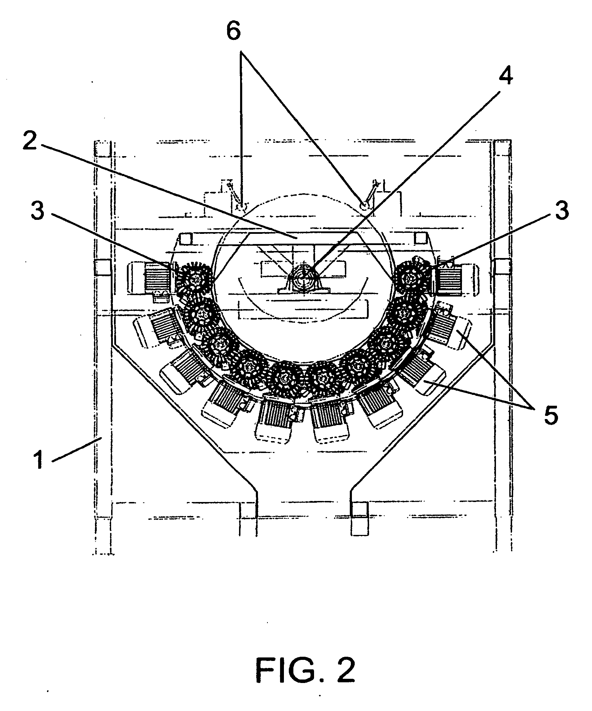

In figure 2, an alternative transmission system is presented for the drum, not mentioned before, consisting in the mounting over the bedplate (1) of a couple of end of trajectory limits (6) to reverse the rotation of a motor that can be set/adjusted directly onto the drum axel (4).

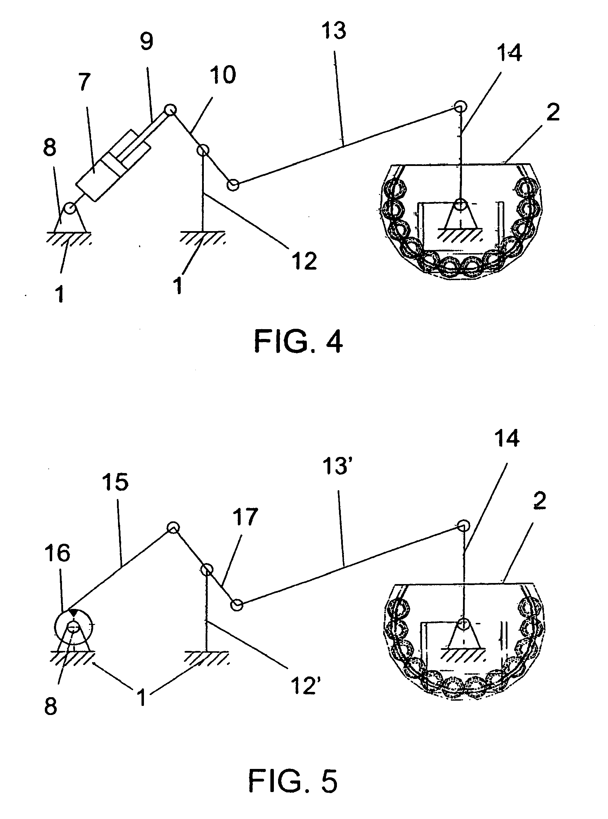

Nevertheless and following a practical example to carry out this description, the activating of the drum (2) is operated by an hydraulic or a pneumatic cylinder (7) the same as in figure 4, or with the cooperation of an electric or hydraulic motor (8), such as the example of figure 5.

In the first case, the cylinder (7), with a swinging movement adjusted over a base (8) associated to a particular point of the bedplate (1), acts by the free end of its rod (9) over a connecting rod (10), appropriately placed over the bedplate (1), joining the said connecting rod (10) by its other end to a transmission lever (13) that at the same time is joined by the remaining end to an arm (14) strongly joined to the drum (2), so the extension or retraction movement (9) of the rod's piston (7) means a longitudinal movement of the lever (13), consequently making the arm swing (14) that is at the same time given to the drum (2).

In the second case a first connecting rod (15) receives the movement from an eccentric point (16) set over the motor's axel (8), and transmits the movement to a second connecting rod (17), the said connecting rod acting (17) over the lever (13') that at the same time is joined to the main arm (14') supporting the drum (2).

It is clear that these transmission mechanisms comply with their respective examples when practice takes places, as it is a fact that any other type of activating / operating system or any other type of transmission able to supply the drum (2) with an alternative movement such as the one represented in figure 3 can be used.

## Claims

1. Washer-polisher for fruit and vegetables, belonging to the type that incorporates a drum with a slightly tilted horizontal axel in which, both brushes and rollers work together for washing, polishing, grading or even drying the products, being the said drum (2) equipped with operating systems (7-8) that provide an alternate swinging movement over its axel (4), as the brushes/rollers (3) affect only part of the said drum, the upper part of the drum remaining open, with the peculiarity that the swinging movement of the drum (2) is such, that the operative surface of it defined by the combination of brushes/rollers always keeps its opening facing upwards, having foreseen also, that each roller (3) is able to operate independently (5) allowing each one to rotate by itself, in the same or opposite direction.

2. Washer-polisher for fruit and vegetables according to claim 1, being the main feature the drums operating systems (2) consisting in a cylinder (7), hydraulic or pneumatic, that via the connecting rods / transmission levers (10-13) and an arm (14) completely joined to the drum (12), supplies to the drum the mentioned swinging movement.

3. Washer-polisher for fruit and vegetables according to claim 1, being the main feature the drums operating systems (2) consisting in an electric or hydraulic motor (8), that via an eccentric (16) and a set of connecting rods and levers (15-17-13') transmits the movement to an arm (14') completely joined to the said drum.

4. Washer-polisher for fruit and vegetables according to claim 1, being the main feature the drums operating systems (2) consisting in a two-way rotation motor connected directly to the drums axel (4) and with an alternate movement controlled by two end of trajectory limits (6).

5. Washer-polisher for fruit and vegetables according to the preceding claims, being the main feature the operating systems for the brushes / rollers (3) having each one of them own respective electric motor that operates independently (5).

## Patentansprüche

1. Wasch- und Polieranlage für Obst und Gemüse, welche zu der Art gehört, die eine Trommel mit einer leicht horizontal geneigten Achse einschließt, in der sowohl Bürsten als auch Rollen für das Waschen, Polieren, die Sortierung oder sogar das Trocknen des Produkts zusammen arbeiten, wobei die besagte Trommel (2) mit Bedienungssystemen (7-8) ausgestattet ist, die eine abwechselnde Schwingbewegung über deren Achse (4) zur Verfügung stellen, da die Bürsten/Rollen (3) nur auf einen Teil der besagten Trommel einwirken, wobei der obere Teil der Trommel offen bleibt, mit der Besonderheit, dass die Schwingbewegung der Trommel (2) derartig ist, dass die durch die Kombination der Bürsten/Rollen definierte betriebsfähige Oberfläche derselben deren Öffnung immer nach oben gerichtet hält, wobei ebenfalls vorgesehen ist, dass jede Rolle (3) dazu in der Lage ist, unabhängig (5) zu arbeiten, wobei es jeder derselben erlaubt ist, für sich alleine in derselben oder der entgegengesetzten Richtung zu drehen.

2. Wasch- und Polieranlage für Obst und Gemüse nach Anspruch 1, wobei das Hauptmerkmal in den Bedienungssystemen der Trommel (2) besteht, welche aus einem hydraulischen oder pneumatischen Zylinder (7) bestehen, welcher über die Kurbelstangen / Übersetzungshebel (10-13) und einen Arm (14), die vollständig mit der Trommel (12) verbunden sind, die Trommel mit der besagten Schwingbewegung versieht.

3. Wasch- und Polieranlage für Obst und Gemüse nach Anspruch 1, wobei das Hauptmerkmal in den Bedienungssystemen der Trommel (2) besteht, welche aus einem elektrischen oder hydraulischen Motor (8) bestehen, welcher über einen Exzenter (16) und eine Gruppe von Kurbelstangen und Hebeln (15-17-13') die Bewegung an einen Arm (14') überträgt, der vollständig mit der besagten Trommel verbunden ist.

4. Wasch- und Polieranlage für Obst und Gemüse nach Anspruch 1, wobei das Hauptmerkmal in den Bedienungssystemen der Trommel (2) besteht, welche aus einem Zweiwege-Rotationsmotor bestehen, welcher direkt mit der Trommelachse (4) und mit einer abwechselnden Bewegung verbunden ist, die von zwei Begrenzungen des Hubendes (6) kontrolliert werden.

5. Wasch- und Polieranlage für Obst und Gemüse nach den vorherigen Ansprüchen, wobei das Hauptmerkmal in den Bedienungssystemen der Bürsten / Rollen (3) besteht, wobei jede derselben über einen eigenen jeweiligen Elektromotor verfügt, der unabhängig arbeitet (5).

## Revendications

1. Laveur-polisseur pour fruits et légumes, appartenant au type qui comporte un tambour avec un axe horizontal légèrement incliné dans lequel, brosses et rouleaux travaillent conjointement pour laver, polir, calibrer ou même sécher les produits, ledit tambour (2) étant équipé de systèmes de fonctionnement (7-8) qui produisent un mouvement de balancement alternatif sur son axe (4), tandis que les brosses/rouleaux (3) affectent uniquement une partie dudit tambour, la partie supérieure du tambour restant ouverte, avec la particularité que le mouvement de balancement du tambour (2) est tel que la surface opérationnelle de celui-ci définie par la combinaison de brosses/rouleaux maintient toujours sa face d'ouverture vers le haut, ayant été prévu également, que chaque rouleau (3) soit capable de fonctionner indépendamment (5) en permettant à chacun de tourner par lui-même, dans le même sens ou dans le sens opposé.

2. Laveur-polisseur pour fruits et légumes selon la revendication 1, la caractéristique principale étant les systèmes de fonctionnement des tambours (2) consistant en un cylindre (7), hydraulique ou pneumatique, qui via les tiges de connexion / leviers de transmission (10-13) et un bras (14) complètement relié au tambour (12), donne au tambour le mouvement de balancement mentionné.

3. Laveur-polisseur pour fruits et légumes selon la revendication 1, la caractéristique principale étant les systèmes de fonctionnement des tambours (2) consistant en un moteur électrique ou hydraulique (8), qui via un excentrique (16) et un jeu de tiges et de leviers de connexion (15-17-13') transmet le mouvement à un bras (14') complètement relié audit tambour.

4. Laveur-polisseur pour fruits et légumes selon la revendication 1, la caractéristique principale étant les systèmes de fonctionnement des tambours (2) consistant en un moteur à rotation bidirectionnelle connecté directement à l'axe (4) des tambours et avec un mouvement alternatif contrôlé par deux extrémités de limites de trajectoire (6).

5. Laveur-polisseur pour fruits et légumes selon les revendications précédentes, la caractéristique principale étant les systèmes de fonctionnement des brosses / rouleaux (3) chacun d'entre eux ayant son propre moteur électrique respectif qui fonctionne indépendamment (5).
